Europäisches Patentamt

European Patent Office

Office européen des brevets

(19)

(11) Veröffentlichungsnummer: **0 391 922 B1**

(12) # EUROPÄISCHE PATENTSCHRIFT

(45) Veröffentlichungstag der Patentschrift:
06.11.91 Patentblatt 91/45

(51) Int. Cl.$^5$: **B60C 23/04**

(21) Anmeldenummer: **88908931.4**

(22) Anmeldetag: **16.10.88**

(86) Internationale Anmeldenummer:
**PCT/DE88/00634**

(87) Internationale Veröffentlichungsnummer:
**WO 89/05239 15.06.89 Gazette 89/13**

(54) **REIFENDRUCKSENSOR FÜR KRAFTFAHRZEUGE.**

(30) Priorität: **04.12.87 DE 3741129**

(43) Veröffentlichungstag der Anmeldung:
**17.10.90 Patentblatt 90/42**

(45) Bekanntmachung des Hinweises auf die
Patenterteilung:
**06.11.91 Patentblatt 91/45**

(84) Benannte Vertragsstaaten:
**DE FR GB IT SE**

(56) Entgegenhaltungen:
**DE-A- 2 626 475**
**DE-A- 3 108 998**
**DE-A- 3 243 854**

(73) Patentinhaber: **ROBERT BOSCH GmbH**
**Postfach 10 60 50**
**W-7000 Stuttgart 10 (DE)**
Patentinhaber: **Dr.Ing.h.c. F. Porsche AG**
**Postfach 40 06 40**
**W-7000 Stuttgart 40 (DE)**

(72) Erfinder: **SCHMID, Hans-Dieter**
**Kamenzer Strasse 8**
**W-8500 Nürnberg (DE)**
Erfinder: **HETTICH, Gerhard**
**Martin-Renz-Strasse 8**
**W-8501 Dietenhofen (DE)**
Erfinder: **BURKARD, Johannes**
**Pillenreuther Strasse 86**
**W-8500 Nürnberg (DE)**

EP 0 391 922 B1

## Beschreibung

### Stand der Technik

Die Erfindung geht aus von einem Reifendrucksensor für Kraftfahrzeuge nach der Gattung des Hauptanspruchs (DE-A-26 26 475).

Für hohe Fahrzeuggeschwindigkeiten von über 160 km/h schreiben Reifen- und Fahrzeughersteller zur Gewährleistung der Fahrsicherheit erhöhte Reifendrücke vor. Will man dieses berücksichtigen, so muß die Schaltschwelle der Druckkammer auf den größten erforderlichen Druck eingestellt werden. Dies führt zu einem Komfortverlust bei niedrigen Geschwindigkeiten (DE-A-32 43 854). Wird dies nicht berücksichtigt sondern der Reifendrucksensor auf den im unteren Geschwindigkeitsbereich bei Vollast vorgeschriebenen Reifendruck eingestellt, so wird bei hohen Geschwindigkeiten der erforderliche höhere Reifendruck nicht überwacht sondern vielmehr eine nicht vorhandene Sicherheit durch die Reifendruck-Überwachungseinrichtung vorgetäuscht.

Aus der DE-A-26 26 475 ist es bekannt, die Membran der Referenz- druckkammer eines Reifendrucksensors mit einem massiven Kolben zu versehen, an dessen Stirnseite der Schlauch des zu überwachenden Reifens anliegt und der bei ausreichendem Luftdruck im Reifen die Membran entgegen dem Druck in der Referenzdruckkammer soweit eindrückt, daß in der Referenzdruckkammer ein elektrischer Kontakt geschlossen wird. Dort ist ferner erwähnt, daß Zentrifugalkräfte am Kolben der Membran die vom Reifendruck auf die Membran ausgeübte Kraft bei steigender Geschwindigkeit vorteilhaft verringern, so daß bei höheren Geschwindigkeiten der Reifendruck erhöht werden muß, um. den Schaltkontakt geschlossen zu halten. Dabei ist jedoch nachteilig, daß dieser als Zusatzmasse für die Membran verwendete Kolben vom Schlauch des Reifens abgedeckt ist, so daß die an ihm wirksamen Fliehkräfte nur zum Teil und völlig unbestimmbar an der Referenzdruckkammer zur Anhebung der Schaltschwelle wirksam werden. Mit dieser Lösung ist es daher nicht möglich, die Anhebung der Schaltschwelle um ein reproduzierbares Maß bei einer bestimmten Geschwindigkeit gegenüber dem Stillstand zu realisieren, da die geschwindigkeitsabhängige Anhebung der Schaltschwelle bei dieser bekannten Ausführung nicht vorher bestimmbar ist.

Mit der vorliengenen Lösung gemäß Anspruch 1 wird angestrebt, einen Reifendrucksensor zu entwickeln, bei dem die Zusatzmasse an der Membran der Referenzdruckkammer derart angeordnet und bemessen ist, daß die Schaltschwelle im oberen Geschwindigkeitsbereich um einen vorgegebenen, reproduzierbaren Betrag gegenüber Stillstand angehoben wird.

Der erfindungsgemäße Reifendrucksensor mit den kennzeichnenden Merkmalen des Hauptanspruchs hat den Vorteil, daß auch bei hohen Geschwindigkeiten des Fahrzeugs der Reifendrucksensor den Schwellwert für den Mindestdruck im Reifen um einen für die Sicherheit des Reifens erforderlichen Betrag geschwindigkeitsabhängig anhebt. Damit wird gewährleistet, daß immer dann von der Reifendruck-Überwachungsrinrichtung ein Signal ausgelöst wird, wenn das Fahrzeug die für den vorhandenen Reifendruck zulässige Höchstgeschwindigkeit überschreibt. Ein weiterer Vorteil besteht darin, daß die Zusatzmasse der Membran durch die nahezu punktförmige Befestigung an der Membranmitte die Schaltschwelle mit zunehmender Geschwindigkeit progressiv anhebt, so daß die Kennlinie des geschwindigkeitsabhängig ansteigenden Schwellwertes des Reifendrucksensors im unteren Geschwindigkeitsbereich flach verläuft und im oberen Geschwindigkeitsbereich zunehmend schneller ansteigt. Damit ist es möglich, den Schwellwert über den gesamten Geschwindigkeitsbereich oberhalb des Druckwertes zu halten, bei dem der Reifen unter Vollast zerstört würde. Außerdem wird durch die möglichst punktförmige Befestigung der Zusatzmasse an der Membran eine Versteifung der Membran weitgehend vermieden. Die Sensitivität der Membran bleibt erhalten und unabhängig davon kann durch die gewünschte geschwindigkeitsabhängige Anhebung der Schaltschwelle die Zusatzmasse genau berechnet werden.

Durch die in den Unteransprüchen aufgeführten Maßnahmen ergeben sich vorteilhafte Weiterbildungen und Verbesserungen der im Hauptanspruch angegebenen Merkmale. Dabei ist es zur exakten Bestimmung der Zusatzmasse an der Membran zweckmäßig, diese nach der Gleichung $m = \frac{\pi}{4} \cdot r^2 \cdot (\frac{R}{v^2} \cdot \Delta P - \rho \cdot a) \cdot k$ zu bestimmen, wobei die Membran den Radius r, den Umlaufradius R und die Umlaufgeschwindigkeit v hat, die Schaltschwelle um die Druckdifferenz $\Delta p$ angehoben wird und wobei die Versteifung der Membran durch die Befestigung der Zusatzmasse durch den Faktor k berücksichtigt wird, der sich für jede Baugröße des Reifendrucksensors durch eine Messung ermitteln läßt und zwischen 1,1 und 1,5 liegt. Ein besonders günstiger Faktor k läßt sich dadurch erzielen, daß die Zusatzmasse an einen zentrischen Vorsprung der Membran und/oder der Zusatzmasse mit einer Punktschweißung an der Membran befestgigt ist. Demgegenüber läßt sich aber auch eine Ringschweißung an der Membranmitte verwenden, die größeren Beanspruchungen standhält.

### Zeichnung

Ein Ausführungsbeispiel der Erfindung ist in der Zeichnung dargestellt und in der nachfolgenden Beschreibung näher erläutert. Es zeigen Figur 1 den Ausschnitt eines Fahrzeugrades mit in der Felge eingesetzten, erfindungsgemäßen Reifendrucksensors, Figur 2 einen Querschnitt durch den erfindungsgemäßen Reifendrucksensor in vergrößerter Darstellung, Figur 3a einen stark vergrößerten Bereich der Membran mit der Zusatzmasse in einer ersten Ausführungsform und Figur 3b den gleichen Membranbereich in einer anderer Ausführungsform, Figur 4 zeigt verschiedene geschwindigkeitsbhängige Kennlinien einer Reifendrucküberwachung.

Beschreibung des Ausführungsbeispieles

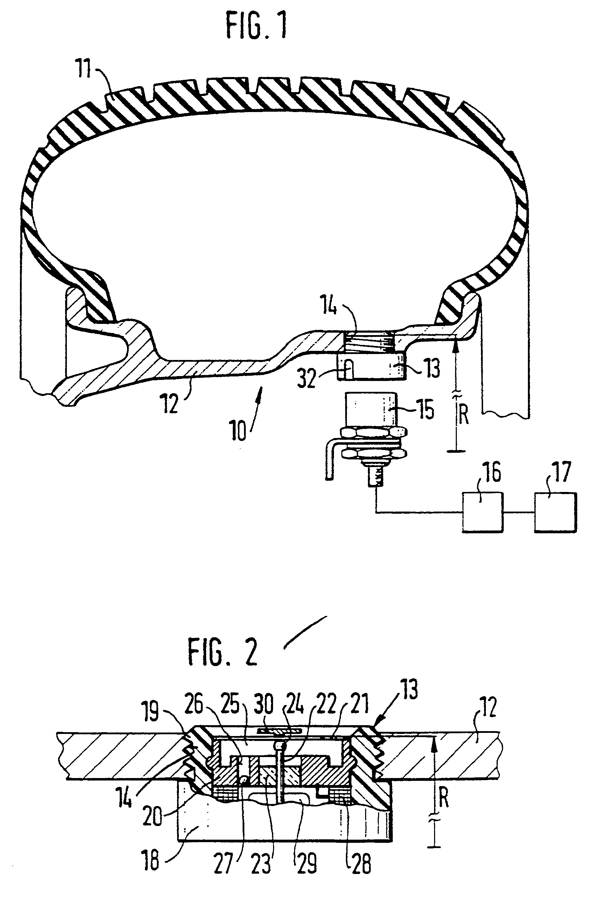

In Figur 1 ist der Ausschnitt eines Kraftfahrzeugrades in verkleinertem Maßstab im Querschnitt dargestellt und mit 10 bezeichnet. Er zeigt einen Reifen 11, der auf einer Radfelge 12 befestigt ist. An einem nach innen gerichteten Abschnitt der Radfelge 12 ist ein Reifendrucksensor 13 radial zur Radachse in einer Gewindebohrung 14 der Radfelge 12 befestigt. In geringem Abstand dazu ist im Bereich des Reifendrucksensors 13 an der nicht dargestellten Radaufhängung des Fahrzeugs ein Signalaufnehmer 15 befestigt, dessen Stirnseite zum Reifendrucksensor 13 hin gerichtet ist und eine hochfrequente Schwingung in den Reifendrucksensor 13 einkoppelt, wenn dieser bei jeder Umdrehung des Fahrzeugrades 10 vorbeiläuft. Der Aufnehmer 15 ist gemeinsam mit den Aufnehmern der übrigen Fahrzeugräder an eine Ausworteschaltung 16 mit einer daran angeschlossenen Warnanzeige 17 verbunden, die bei zu geringem Luftdruck in einem der Reifen ein Warnsignal begibt.

Der Aufbau des Reifendrucksensors 13 ist in Figur 2 dargestellt. Er besteht aus einem Sensorgehäuse 18 aus Isolierstoff, das mit einem Gewindeansatz 19 in die Gewindebohrung 14 der Radfelge 12 einzuschrauben ist. Das Sensorgehäuse 18 ist nach vorn zum Reifen 11 hin offen. In dem Sensorgehäuse 18 ist eine Referenzdruckkammer 20 aus Stahl formschlüssig eingesetzt, die zum Reifen hin durch eine elektrisch leitende Membran 21 aus Edelstahl abgeschlossen ist. In der Mitte der Referenzdruckkammer 20 ist ein Kontaktstift 22 mit einer Glasdurchführung 23 druckdicht und elektrisch isoliert im Boden der Referenzdruckkammer 20 befestigt. An seinem vorderen Ende trägt er eine aufgeschweißte Kontaktkugel 24, vorzugsweise aus Gold. Die Membran 21 ist in ihrem äußeren Bereich druckdicht und spannungsfrei an der Refrenzdruckkammer 20 durch Laserstrahl festgeschweißt. In dem von der Referenzdruckkammer 20 gebildeten Druckraum 25 wird über einen Einfüllkanal 26 Luft oder Stickstoff mit dem erforderlichen Referenzdruck eingefüllt, so daß die Membran 21 erst dann die Kontaktkugel 24 berührt, wenn der von muffen auf die Membran 21 wirkende Luftdruck den zu überwachenden Mindestdruck im Reifen des Fahrzeugs, d.h., den sogenannten Schwellwert erreicht.

Nach dem Befüllen der Referenzdruckkammer 20 wird der Einfüllkanal 26 durch eine darin eingepreßte oder verschweißte Kugel 27 druckdicht verschlossen. Unterhalb der Referenzdruckkammer 20 ist noch eine Ringspule 28 sowie ein Kondensator 29 im Sensorgehäuse 18 angeordnet, die zueinander in Reihe geschaltet sind und einen Schwingkreis bilden, der über die Membran 21 und den Kontaktstift 22 geöffnet bzw. geschlossen wird. Zu diesem Zweck ist das freie Ende der Ringspule 28 über die Referenzdruckkammer 20 mit der Membran 21 verbunden und nicht erkennbar das freie Ende des Kondensators 29 mit dem unteren Ende des Kontaktstiftes 22.

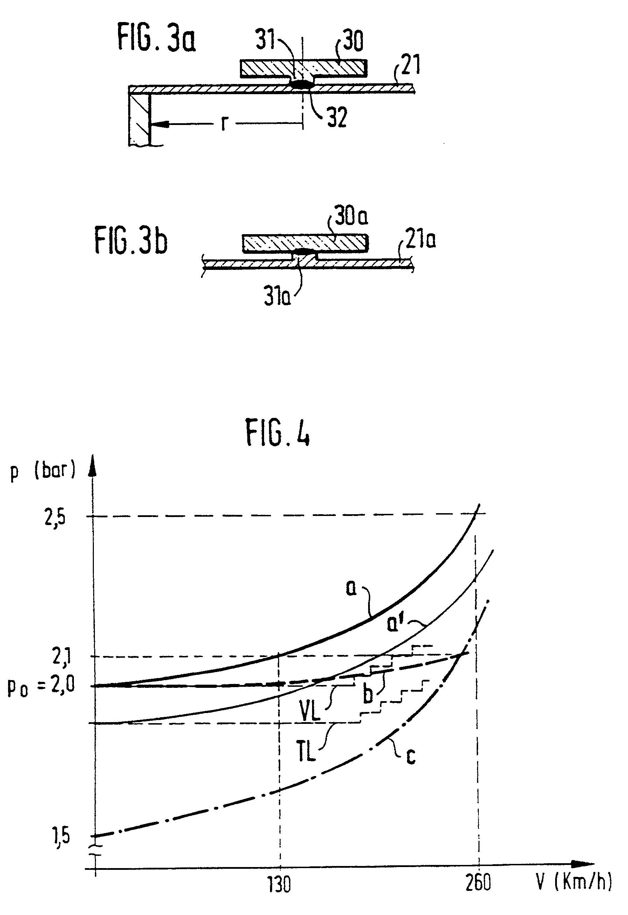

An der Außenseite der im montierten Zustand zur Lauffläche des schlauchlosen Reifens parallel liegenden Membran 21 ist eine Zusatzmasse 30 frei angeordnet, indem diese Zusatzmasse 30 an der Membranmitte durch Punktschweißung befestigt ist. Figur 3a und Figur 3b zeigen zwei Alternativlösungen bei der Befestigung der Zusatzmasse 30 an der Membran 21. Nach Figur 3a ist die Zusatzmasse 30 als runde flache Scheibe mit einem zentrischen Vorsprung 31 an der Unterseite der Membran versehen. Dieser Vorsprung 31 wird auf die Membranmitte aufgesetzt und mit einer Punktschweißung 32 daran befestigt. Nach Figur 3b ist an der Membranmitte z.B. durch Freiätzen der Membran 21a ein Vorsprung 31a erzeugt worden, auf dem die als flache runde Scheibe geformte Zusatzmasse 30a mittig aufgesetzt und durch Widerstandsschweißung mit der Membran verbunden wird. Beide Alternativlösungen haben den Vorteil, daß durch die nahezu punktförmige Befestigung der Zusatzmasse 30, 30a an der Membranmitte praktisch keine Versteifung der Membran 21, 21a eintritt und damit die Durchbiegung der Membran in Abhängigkeit von der Druckdifferenz an der Membran voll erhalten bleibt. Dadurch ist es möglich, bei einer vorgegebenen, gewünschten Anhebung des Schwellwertes bzw. der Schaltschwelle die Größe der Zusatzmasse 30, 31 genau zu berechnen, da diese den Fliehkräften frei ausgesetzt ist und nicht wie bisher vom Schlauch des Reifens abgedeckt wird.

In Figur 4 zeigt die Kennlinie a den Verlauf der Schwellwertanhebung bei dem Reifendrucksensor 13 mit der Zusatzmasse 30 mit zunehmender Fahrgeschwindigkeit. Gegenüber dem Stillstandswert po wird hier bei einer Fahrzeuggeschwindigkeit von 260 km/h der Schwellwert des Reifendrucksensors 13 von 2 Bar um 0,5 Bar auf 2,5 Bar angehoben. Ohne Zusatzmasse würde der Schwellwert nach der Kennlinie b durch die Masse der Membran nur unerheblich auf etwa 2,1 Bar ansteigen. Die Kennlinie c zeigt den Reifendruck, bei dem der Reifen unter Vollast bereits zerstört wird. Diese Kennlinie steigt ebenfalls mit der Drehzahl progressiv an und schneidet die Kennlinie b bereits vor dem Erreichen der Höchstgeschwindigkeit von 260 km/h. Ohne Zusatzmasse würde folglich mit einem Druck von etwa 2,1 Bar bei hohen Geschwindigkeiten ohne Warnung durch die Reifendruckkontrollvorrichtung der Reifen zerstört werden. Durch die Zusatzmasse 30 wird nun der Schwellwert von der Kennlinie b auf die Kennlinie a angehoben, so daß die Kennlinie c nicht mehr geschnitten wird. Das hat zur Folge, daß nunmehr ein vorhandener Reifendruck von z.B. 2,1 Bar nur bis zu einer Geschwindigkeit von 130 km/h ausreichend ist. Bei höheren Geschwindigkeiten wird der Schwellwert des Reifendrucksensors 10 gemäß der Kennlinie a durch die Zusatzmasse 30 über den vorhandenen Reifendruck angehoben die Membran 21 hebt vom Kontakt 24 des Sensors 13 ab und es wird ein Warnsignal abgegeben, das dem Fahrer signalisiert, die Fahrzeuggeschwindigkeit zu verringern oder den Reifendruck zu erhöhen

Um einen ausreichenden Sicherheitsabstand der Kennlinie a von der Kennlinie c für die Zerstörungsgeschwindigkeit bei Vollast zu erhalten, kann der Referenzdruck in der Referenzdruckkammer 20 des Reifendrucksensors 10 in der Fertigung auf den Reifendruck eingestellt werden, der von den Reifen- und Fahrzeugherstellern für Vollast im unteren Geschwindigkeitsbereich vorgegeben ist. Der Schwellwert sollte dabei beispielsweise bei einer Fahrgeschwindigkeit von 130 km/h um mindestens 5 % gegenüber dem Schwellwert bei Stillstand angehoben werden.

Bei der Berechnung der Zusatzmasse 30 am Reifendrucksensor 10 kann wie folgt vorgegangen werden:

Für die minimale Auslenkung wl der Mitte einer massearmen Membran durch eine Zusatzmasse m gilt bei einer Umlaufgeschwindigkeit v der Membran bzw. der Masse, bei einem Umlaufradius R der Membran bzw. der Masse, bei einem Membranradius r und einem Versteifungsfaktor K der Memban folgende Gleichung

$$w1 = m \cdot \frac{V^2}{R} \cdot \frac{r^2}{16 \cdot \pi \cdot K} \cdot \quad (1)$$

Für den Versteifungsfaktor k der Membran gilt:

$$k = \frac{E \cdot a^3}{12(1-v)} \quad (2)$$

Dieser Faktor k ist somit abhängig von dem Elastizitätsmodul E, der Membrandicke a und der Querdehnung v, die für Stahl den Wert ~ 0,3 hat.

Die maximale Auslenkung wl muß durch eine entgegengesetzte Auslenkung w2 der Membran kompensiert werden, welche durch den Druckanstieg Δ p im Reifen erzeugt wird und den Fliehkräften an der Zusatzmasse m entgegenwirkt. Dafür gilt die Gleichung

$$w2 = \frac{\Delta p \cdot r^4}{64 \cdot K} \quad (3)$$

Aus der Bedingung w1-w2=0 folgt für die Zusatzmasse ml die Gleichung

$$ml = \frac{\pi}{4} \cdot \frac{R \cdot r^2}{v^2} \cdot \Delta p \quad (4)$$

Im Beispielsfall ergibt sich bei einem Umlaufradius R=210 mm, einem Membranradius r=10,5 mm und einer Umlaufgeschwindigkeit v=49 m/s (bei einer Fahrgeschwindigkeit von 260 km/h und einem Rollradius des Reifens von 0,31 m) und bei der gewünschten Anhebung des Schwellwertes von Δ p=0,5 Bar eine Zusatzmasse 30 von

ml = 0,37 g.

Bei dieser Berechnung der Zusatzmasse 30 wurde die Masse der Membran und die dadurch verursachte Anhebung des Schwellwertes nach der Kennlinie b aus Figur 4 vernachlässigt. Je nach Material und Dicke der Membran kann jedoch der Einfluß der Membranmasse von Bedeutung sein. So ergibt sich für die Auslenkung w3 der Membranmitte ohne die Zusatzmasse bei einer Wichte ρ und einer Membrandicke a die Gleichung

$$w3 = \rho \cdot a \cdot \frac{V^2}{R} \cdot \frac{r^4}{64\,K} \quad (5)$$

Da diese Auslenkung w3 durch die Membranmasse in gleicher Richtung wie die Zusatzmasse 30 wirkt, muß auch sie ebenso durch die Schwellwertanhebung Δ p kompensiert werden. Aus dieser Bedingung w1+w3-w2=0 folgt dann für die Zusatzmasse 30 die Gleichung:

$$m = \frac{\pi}{4} \cdot r^2 \cdot \left( \frac{R}{V^2} \cdot \Delta p - \rho \cdot a \right) \cdot k \quad (6)$$

Der Faktor k ist hier eine Konstante, die in erster Linie eine Versteifung der Membran durch die nicht punktförmige Befestigung der Zusatzmasse 30, sowie die nicht konstante Membrandicke a und die nicht exakte feste Einspannung der Membran 21 am äußeren Rand der Referenzdruckkammer 20 berücksichtigt. Der Wert liegt je nach Aufbau des Reifendrucksensors zwischen 1,1 und 1,5. Im Beispielsfall soll die Dicke der Membran a=0,2 mm, die Dichte ρ =7,9 g/mm³ und der Faktor k=1,4 sein. Daraus ergibt sich für die Zusatzmasse 30 nach der Formel (6) m = 0,34 g.

Die von den Reifen- und Fahrzeugherstellern im Beispielsfall zur Zeit vorgeschriebenen Grenzwerte für den Reifenfülldruck sind in Figur 4 als Kennlinie VL für Vollast und als Kennlinie TL für Teillast eingezeichnet. Da diese Reifendrücke bei Vollast höher sind als bei Teillast, wird bei dem erfindungsgemäßen Reifendrucksensor mit der Zusatzmasse 30 vorgeschlagen, bei ausreichendem bestand von mindestens 0,3 Bar von der Zerstörungsgeschwindigkeits-Kennlinie c den Schwellwert gemäß der Kennlinie a' bei Stillstand des Fahrzeugs auf den Teillastwert oder gar darunter abzusenken, indem der Druck der Referenzdruckkammer 20 in der Fertigung entsprechend abgesenkt wird; und den Schwellwert durch die Zusatzmasse 30 bei hohen Geschwindigkeiten oberhalb der z.Zt. vorgeschriebenen Reifenfülldruck-Volllast-Grenzwerte anzuheben. Damit erreicht man gegenüber der Einstellung des Referenzdruckes auf den vorgegebenen Vollastwert einen höheren Federungskomfort im unteren Geschwindigkeitsbereich und eine höhere Sicherheit im oberen Geschwindigkeitsbereich gegenüber einer Überwachungseinrichtung mit den bekannten Reifendrucksensoren.

## Patentansprüche

1. Reifendrucksensor (13) für fahrzeuge mit einem am Umfang der Radfelge (12) der Fahrzeugräder (10) radial zur Radachse zu befestigenden, vom Reifendruck zu betätigenden Druckschalter, der eine Referenzdruckkammer (20) aufweist, welche zum Reifen (11) hin durch eine elektrisch leitende, zur Lauffläche des Reifens parallel angeordnete Membran (21, 21a) abgeschlossen ist, an der zur geschwindigkeitsabhängigen Anhebung der Schaltschwelle des Reifendrucksensors (13) an ihrem mittleren Bereich eine Zusatzmasse (30, 30a) zentrisch befestigt ist, wobei die Referenzdruckkammer (20) einen Kontakt (22) trägt, an dem bei ausreichendem Luftdruck im Reifen ein Gegenkontakt am mittleren Bereich der Membran (21, 21a) zur Schließung eines Stromkreises anliegt, so daß der Zustand des Stromkreises von einem am Fahrzeug befestigten Aufnehmer (15) mit einer Auswerteschaltung (16) drahtlos zu überwachen ist, wobei die Beziehung m = f ( $\Delta$ p, $r^2$, R, $v^2$) so bemessen ist, daß sie bei einem vorgegebenen Radius (r) der Membran (21, 21a), einem vorgegebenen Umlaufradius (R) der Membran und einer vorgegebenen Umlaufgeschwindigkeit (v) der Membran die Schaltschwelle um eine Druckdifferenz ($\Delta$ p) gegenüber dem Schwellwert ($p_0$) bei Stillstand anhebt, dadurch gekennzeichnet, daß die Zusatzmasse (30, 30a) mit der Membran (21, 21a) nahezu punktförmig fest verbunden ist, wobei die Membran (21, 21a) mit der Zusatzmasse (30, 30a) freiliegend unmittelbar von dem zu überwachenden Druckmedium im Reifen beaufschlagt ist, derart, daß durch die Bemessung der den Fliehkräften unbehindert ausgesetzten Zusatzmasse (30, 30a) die Schaltschwelle um einen vorgegebenen, reproduzierbaren Betrag ( $\Delta$ p) gegenüber dem Schwellwert (po) bei Stillstand anhebbar ist.

2. Reifendrucksensor nach Anspruch 1, dadurch gekennzeichnet, daß die Zusatzmasse (30, 30a) nach der Gleichung (5) $m = \frac{\pi}{4} r^2 (\frac{R}{v^2} \Delta p - \rho \cdot a)k$ berechnet ist, wobei $\rho$ die Materialdichte der Membran (21) a die Membrandicke ist und der faktor (k) für die Versteifung der Membran (21) durch die Befestigung der Zusatzmasse (30, 30a) zwischen 1,1 und 1,5 liegt.

3. Reifendrucksensor nach Anspruch 1 oder 2, dadurch gekennzeichnet, daß die Zusatzmasse (30, 30a) an einem zentrischen Vorsprung (31, 31a) der Membran (21) und/oder der Zusatzmasse (30, 30a) mit einer Punktschweißung (32) an der Membran (21) befestigt ist.

4. Reifendrucksensor nach einem der Ansprüche 1 bis 3, dadurch gekennzeichnet, daß die Schaltschwellenanhebung bei einer Fahrgeschwindigkeit von 130 km/h um mindestens 5 % gegenüber dem Schwellwert po bei Stillstand beträgt.

## Claims

1. Tyre pressure sensor (13) for vehicles having a pressure switch which is to be attached to the periphery of the wheel rim (12) of the vehicle wheels (10), radially with respect to the wheel axis, to be actuated by the tyre pressure and having a reference pressure chamber (20) which is sealed off from the tyre (11) by an electrically conductive diaphragm (21, 21a) arranged in parallel to the running face of the tyre, on which diaphragm an additional load (30, 30a) is centrally attached in its centre region for the speed-dependent raising of the threshold value of the tyre pressure sensor (13), the reference pressure chamber (20) bearing a contact (22), on which a counter contact rests on the central area of the diaphragm (21, 21a), when there is adequate air pressure in the tyre, for the purpose of closing a current circuit so that the state of the current circuit can be monitored in wireless fashion by a detector (15) with an evaluation circuit (16) attached to the vehicle, the relation m = f ($\Delta$p, $r^2$, R, $v^2$) being dimensioned in such a way that at a prescribed radius (r) of the diaphragm (21, 21a), a prescribed radius of rotation (R) of the diaphragm and a prescribed speed of rotation (v) of the diaphragm it raises the switching threshold by a pressure difference ($\Delta$p) in relation to the threshold value ($p_0$) in the stationary state, characterised in that the additional load (30, 30a) is rigidly connected to the diaphragm (21, 21a) in a virtually dot-shaped manner, the diaphragm (21, 21a) with the additional load (30, 30a) being freely loaded directly by the pressure medium, to be monitored, in the tyre, in such a way that, as a result of the dimensioning of the additional load (30, 30a) which is subjected in unimpeded fashion to the centrifugal forces, the switching threshold can be raised by a prescribed, reproducible amount ($\Delta$p) in relation to the threshold value (po) in the stationary state.

2. Tyre pressure sensor according to Claim 1, characterised in that the additional load (30, 30a) is calculated according to the equation

$$m = \frac{\pi}{4} r^2 (\frac{R}{v^2} \Delta p - \zeta \cdot a)k, \quad (5)$$

where $\zeta$ is the material thickness of the diaphragm (21) a is the diaphragm thickness and the factor (k) for the stiffening of the diaphragm (21) by the attachment of the additional load (30, 30a) is between 1.1 and 1.5.

3. Tyre pressure sensor according to Claim 1 or 2, characterised in that the additional load (30, 30a) is attached to the diaphragm (21) by a central projection (31, 31a) of the diaphragm (21) and/or of the additional load (30, 30a) using a spot weld (32).

4. Tyre pressure sensor according to one of Claims 1 to 3, characterised in that the raising of the threshold value at a driving speed of 130 km/h is by at least 5% in relation to the threshold value po in the stationary state.

**Revendications**

1. Capteur de la pression des pneus (13) pour automobiles, avec un manocontacteur fixé à la périphérie de la jante (12) des roues de l'automobile, radialement à l'axe de la roue, et sensible à la pression du pneu, qui comporte une chambre de pression de référence (20) liée au pneu (11) par une membrane (21, 21a) électriquement conductrice parallèle à la surface de roulement, au centre de laquelle est fixée une masse additionnelle (30, 30a) pour élévation en fonction de la vitesse du seuil de commutation du capteur de la pression des pneus (13), dont la chambre de pression de référence (20) porte un contact (22) avec un contact antagoniste au milieu de la membrane (21, 21a) assurant pour une pression suffisante dans le pneu la fermeture d'un circuit électrique, de telle sorte que l'état du circuit est contrôlé par un capteur (15) fixé sur le véhicule et lié sans fil à un circuit d'exploitation (16), la relation $m = f(\Delta p, r^2, R, V^2)$ étant déterminée de façon que, pour un rayon (r) donné de la membrane (21, 21a), un rayon de rotation (R) donné de la membrane, et une vitesse (v) donnée de la membrane, elle élève le seuil de commutation d'une différence de pression ($\Delta p$) vis-à-vis de la valeur de seuil à l'arrêt ($p_0$), caractérisé par le fait que la masse additionnelle (30, 30a) est liée de façon quasi-ponctuelle à la membrane (21, 21a), la membrane (21, 21a) avec la masse additionnelle (30, 30a) étant commandée librement et directement par la pression moyenne contrôlée dans le pneu, et par le fait qu'il est possible, par détermination de la masse additionnelle (30, 30a) aisément libérée des forces centrifuges, d'élever le seuil de commutation d'une valeur ($\Delta p$) prédéterminée et reproductible vis-à-vis de la valeur $p_0$ à l'arrêt.

2. Capteur de la pression des pneus conforme à la revendication 1, caractérisé par le fait que la masse additionnelle est calculée par l'équation :

$$m = \frac{\pi}{4} \cdot r^2 \cdot \left( \frac{R}{v^2} \cdot \Delta p - g \cdot a \right) \cdot k \quad (5)$$

où g est le poids spécifique du matériau de la membrane (21), a l'épaisseur de la membrane, et où le facteur (k) de raidissement de la membrane (21) du fait de la fixation de la masse additionnelle (30, 30a) est compris entre 1,1 et 1,5.

3. Capteur de la pression des pneus conforme à la revendication 1 ou 2, caractérisé par le fait que la masse additionnelle (30, 30a) est fixée sur une saillie centrale (31, 31a) de la membrane (21) et/ou par le fait que la masse additionnelle (30, 30a) est liée à la membrane (21) au moyen d'une soudure par points.

4. Capteur de la pression des pneus conforme à l'une des revendications 1 à 3, caractérisé par le fait que l'élévation du seuil de commutation pour une vitesse de 130 km/h est d'au moins 5 % par rapport à la valeur de seuil $p_0$ à l'arrêt.

# FIG. 1

# FIG. 2

FIG. 3a

FIG.3b

FIG.4